# EUROPÄISCHE PATENTSCHRIFT

(11) **EP 4 104 388 B1**
(45) Veröffentlichungstag und Bekanntmachung des Hinweises auf die Patenterteilung: **29.11.2023**
(21) Anmeldenummer: 21704755.4
(22) Anmeldetag: 10.02.2021
(51) Int. Cl.: H04L 41/0813, H04L 41/022, H04L 41/0226, H04L 41/0806, H04L 43/0817, H04L 41/0213

(54) **VERFAHREN ZUR KONFIGURATION EINES NETZWERKS, INSBESONDERE IN EINEM KRAFTFAHRZEUG**
METHOD FOR CONFIGURING A NETWORK, IN PARTICULAR, IN A MOTOR VEHICLE
PROCÉDÉ DE CONFIGURATION D'UN RÉSEAU, EN PARTICULIER, DANS UN VÉHICULE À MOTEUR

(30) Priorität: 12.02.2020 DE 102020103546
(43) Veröffentlichungstag der Anmeldung: 21.12.2022
(73) Patentinhaber: Audi AG, 85045 Ingolstadt (DE)
(72) Erfinder: SCHMIDT, Karsten, 85051 Ingolstadt (DE); STANGL, Bernhard, 1030 Wien (AT); MUNOZ CEPILLO, Jose Antonio, 08029 Barcelona (ES); COTRINA, Francisco, 08028 Barcelona (ES)
(74) Vertreter: Lindner Blaumeier Patent- und Rechtsanwälte
(86) Internationale Anmeldenummer: PCT/EP2021/053122
(87) Internationale Veröffentlichungsnummer: WO 2021/160630

(56) Entgegenhaltungen:
- EP-A1- 2 892 199
- EP-A1- 3 079 305
- EP-A1- 3 439 235
- US-A1- 2004 117 513
- US-A1- 2019 087 401

## Beschreibung

Die Erfindung betrifft ein Verfahren zur Konfiguration eines Netzwerks, insbesondere in einem Kraftfahrzeug. Daneben betrifft die Erfindung ein Kraftfahrzeug.

In Kraftfahrzeugen werden mittlerweile eine große Anzahl von Komponenten genutzt, die miteinander kommunizieren sollen. Dies kann zumindest zum Teil über Netzwerke, beispielsweise über Ethernet, erfolgen, wobei es mit zunehmender Komplexität entsprechender Netzwerke vorteilhaft sein kann, nicht ausschließlich Hardwareadressen von Komponenten zur Kommunikation zu nutzen, sondern auch ein Routing, beispielsweise auf Basis des IP-Protokolls, zu ermöglichen.

Für unterschiedliche Komponenten des Kraftfahrzeugs können deutlich unterschiedliche Sicherheitsanforderungen gelten. Beispielsweise soll ein Multimediasystem problemlos extern bereitgestellte Inhalte wiedergeben können, während ein externer Zugriff auf Komponenten, die unmittelbar in den Fahrbetrieb eingreifen können, beispielsweise auf Fahrerassistenzsysteme, nur unter strikten Auflagen und von vertrauenswürdigen Komponenten aus erfolgen soll. Hierbei kann es ausreichend sein, statisch festzulegen, welche Komponenten auf welche Weise mit welchen anderen Komponenten kommunizieren können. Es kann jedoch vorteilhaft sein, eine solche Konfiguration dynamisch anpassen zu können, beispielsweise wenn eine Fehlfunktion einer Komponente oder eine Kompromittierung einer Komponente erkannt wird.

In klassischen Netzwerken kann eine Steuerung des Kommunikationszugriffs auf bestimmte Komponenten durch eine sogenannte Firewall erfolgen, wobei eine Software, die insbesondere auf einem separaten System ausgeführt wird, eingehende bzw. ausgehende Pakete sichtet und filtert. Dies könnte in einem Kraftfahrzeug beispielsweise dadurch implementiert werden, dass ein Embedded-System genutzt wird, das beispielsweise das iptables bzw. nftables-Framework implementiert. Hierbei ist es beispielsweise aus der Druckschrift EP 2 501 101 A1 auch bekannt, eine Firewall als System-on-a-Chip zu implementieren.

Nachteilig an der Verwendung einer zentralen Firewall-Instanz, die sowohl mehrere physische Verbindungen (ports) als auch mehrere logische Verbindungen (sockets) gleichzeitig überwachen muss, ist es, dass hierdurch der Datendurchsatzes des Netzwerkes begrenzt werden kann und zusätzliche Latenzzeiten resultieren können. Insbesondere zusätzliche Latenzzeiten können jedoch in kraftfahrzeugseitigen Netzwerken problematisch sein, da diese auch zur Kommunikation im Rahmen von Echtzeitaufgaben, beispielsweise von Fahrerassistenzsystemen, genutzt werden sollen. Sollen Latenzen minimiert und Datendurchsätze maximiert werden, können aus den rechenintensiven Anforderungen firewallbasierter Lösungen ein hoher Hardwareaufwand und somit hohe Kosten und ein hoher Energieverbrauch resultieren.

Eine mögliche Alternative zur Nutzung einer dedizierten Firewall ist eine Filterung der Kommunikation über Switches im Netzwerk. Hierbei kann üblicherweise der sogenannte "Wire Speed" also der maximale Durchsatz des Netzwerkes unverändert aufrechterhalten werden. Klassische Switches implementieren eine Multiport Bridge, die an einem physikalischen Anschluss eingehende Frames in Abhängigkeit von darin enthaltenen Hardwareadressen, sogenannten MAC-Adressen, an einen weiteren physikalischen Anschluss weiterleiten. Hierdurch stehen zunächst nur sehr eingeschränkte Funktionen zur Filterung einer Kommunikation zur Verfügung. Beispielsweise können für bestimmte Geräte nur Kommunikationen von bestimmten MAC-Adressen zugelassen oder ausgeschlossen werden.

Mittlerweile werden zum Teil auch Routing-Funktionen durch Switches bereitgestellt. Sogenannte Layer-3-Switches bzw. allgemein Switches, die Informationen zusätzlicher Layer berücksichtigen können, werten zur Vermittlung von Frames bzw. Paketen auch Informationen aus höherliegenden Schichten des OSI-Schichtenmodells aus. Beispielsweise kann beim Internetprotokoll eine Herkunfts- bzw. Ziel-IP-Adresse, das verwendete Protokoll und/oder ein Port berücksichtigt werden. Hierdurch wären die durch Switches implementierten Funktionen zur Kommunikationsfilterung ausreichend, um zumindest einen Großteil der im Fahrzeug gewünschten Funktionen zur Kommunikationssteuerung umzusetzen.

Problematisch ist hierbei jedoch, dass verschiedene Hersteller bzw. verschiedene Modelle bzw. verschiedene Firmware-Versionen unterschiedliche Funktionen bereitstellen und in der Regel auch auf unterschiedliche Weise konfiguriert werden müssen. Einige Switches müssen über eine herstellerspezifische Hardwareschnittstelle konfiguriert werden. Selbst Switches, die eine Konfiguration über Standardprotokolle, beispielsweise über eine über eine serielle Schnittstelle, Telnet, Secure Shell oder Ähnliches bereitgestellte Kommandozeile, das Simple Network Management Protocol oder Webbrowser zulassen, unterscheiden sich bezüglich der genutzten Befehlssyntax bzw. der genutzten Arbeitsabläufe zur Konfiguration. Daher können Konfigurationen nicht zwischen verschiedenen Switches ausgetauscht werden. Werden somit beispielsweise in der gleichen Bauserie Switches unterschiedlicher Hersteller genutzt bzw. sollen ähnliche Netzwerkkonfigurationen über Modellserien hinweg konfiguriert werden, die unterschiedliche Switches nutzen, müssen Ansteuersequenzen zur Konfiguration für die verschiedenen Switches separat entwickelt und gewartet werden. Werden zudem mehrere verschiedene Switches im gleichen Netzwerk genutzt, erschwert die Nutzung unterschiedlicher Befehlssätze die Konfiguration des Netzes erheblich. In diesem Zusammenhang ist aus der Druckschrift US 2019/087401 A1 ein Verfahren zur Übersetzung von Eingangsnachrichten in gerätespezifische Kommandos bekannt.

Der Erfindung liegt somit die Aufgabe zugrunde, einen verbesserten Ansatz zur Konfiguration von Netzwerken, insbesondere innerhalb von Kraftfahrzeugen, anzugeben, der insbesondere eine Konfiguration von Routing- und/oder Firewallregeln in Netzwerken mit verschiedenen Switches erleichtert.

Die Aufgabe wird erfindungsgemäß durch ein Verfahren zur Konfiguration eines Netzwerkes gemäß Anspruch 1 gelöst.

Der Erfindung liegt die Idee zugrunde, Konfigurationsinformationen für Switches in dem Netzwerk zunächst in einer gemeinsamen Syntax zu definieren. Da wie obig erläutert für unterschiedliche Switches bzw. Switches mit unterschiedlichen Firmwareversionen potentiell unterschiedliche Steuerinformationen zur Einstellung der gleichen Konfiguration erforderlich sind, werden Verarbeitungsmodule, die insbesondere eine Art Softwaretreiber für den jeweiligen Switch bilden können, genutzt, um die jeweilige in der gemeinsamen Syntax formulierte Konfigurationsinformation in die spezifischen zum Erreichen einer entsprechenden Konfiguration erforderlichen Steuerinformationen zu übersetzen.

Hierdurch wird der Vorteil erreicht, dass unabhängig von den zur Konfiguration des konkreten Switches erforderlichen Steuerinformationen die Konfiguration zunächst in einer gemeinsamen Syntax für alle Switche beschrieben werden kann. Dies erleichtert eine Konfiguration mehrerer Switches erheblich, insbesondere wenn die gemeinsame Syntax an eine im Bereich des Routings bzw. von Firewallkonfigurationen übliche Syntax anlehnt ist bzw. dieser entspricht. Beispielsweise kann sich die gemeinsame Syntax an eine Syntax anlehnen oder dieser entsprechen, die zur Konfiguration im iptables- bzw. nftables-Framework genutzt wird. Allgemein wird vorzugsweise eine gemeinsame Syntax genutzt, die sich an die menschliche Sprache anlehnt. Dies wird auch als "human readable" bezeichnet. Vorzugsweise unterscheidet sich die gemeinsame Syntax sowohl von der Syntax der ersten Steuerinformation als auch von der Syntax der zweiten Steuerinformation. Werden mehr als zwei Switches genutzt, kann die Syntax jeder der genutzten Steuerinformationen von der gemeinsamen Syntax abweichen bzw. die Syntax von Steuerinformationen für wenigstens zwei der Switches kann von der gemeinsamen Syntax abweichen.

In dem erfindungsgemäßen Verfahren erfordert ein Wechsel eines bestimmten Switches bzw. eine Anwendung der gleichen Konfiguration auf ein Netzwerk, das einen anderen Switch umfasst, nur die Nutzung eines anderen Verarbeitungsmoduls. Die Konfigurationsinformationen selbst können unverändert bleiben, wodurch der Entwicklungsaufwand erheblich reduziert wird.

Das erfindungsgemäße Verfahren ist insbesondere dann vorteilhaft, wenn, wie später noch genauer erläutert werden wird, eine dynamische Anpassung der Konfiguration erfolgen soll, beispielsweise wenn eine Fehlfunktion oder eine Kompromittierung einer Komponente des Netzwerks erkannt wird. In diesem Fall kann eine entsprechende Modifikation unabhängig davon, die Konfiguration welches Switches bzw. welcher Switches geändert werden soll, in der gemeinsamen Syntax vorgegeben werden, wodurch entsprechende Konfigurationsänderungen erheblich einfacher implementiert werden können.

Das erfindungsgemäße Verfahren kann insbesondere auch verwendet werden, wenn das Netzwerk mehr als zwei Switches umfasst, die sich bezüglich der Syntax ihrer jeweiligen erforderlichen Steuerinformation unterscheiden. Beispielsweise kann für mehr als zwei Switches eine jeweilige Konfigurationsinformation in der gemeinsamen Syntax bereitgestellt werden, die durch ein jeweiliges Verarbeitungsmodul in die Syntax der von dem jeweiligen Switch erforderlichen Steuerinformation umgesetzt wird, wonach der jeweilige Switch durch die entsprechende Steuerinformation angesteuert werden kann.

Die gemeinsame Syntax bzw. die Syntax wenigstens einer der Steuerinformationen kann mögliche Befehle definieren. Die jeweilige Konfigurationsinformation bzw. Steuerinformation kann somit insbesondere eine Befehlsliste sein. Alternativ kann die jeweilige Syntax ein Format von zu nutzenden Konfigurationsdaten vorgegeben, beispielsweise eine Datenreihenfolge, Feldlängen für einzelne Konfigurationsdaten, etc.

Das Verarbeitungsmodul kann als separates Hardwaremodul ausgebildet sein. Bevorzugt ist das Verarbeitungsmodul jedoch ein Softwaretreiber. Hierbei können die Verarbeitungsmodule bzw. Softwaretreiber von einer gemeinsamen Verarbeitungseinrichtung ausgeführt werden oder auf einer jeweiligen Verarbeitungseinrichtung, die dem jeweiligen Switch zugeordnet ist.

Der Begriff Netzwerk ist im vorliegenden Dokument breit auszulegen. Zwar ist das Netzwerk in einer bevorzugten Ausgestaltung ein Netzwerk, in dem zumindest Funktionen gemäß der dritten Schicht des OSI-Schichtenmodells implementiert sind, also insbesondere eine Routing von Paketen über mehrere Einrichtungen. Es können jedoch auch Netze genutzt werden, die nur Funktionen niedrigerer Schichten implementieren, also z.B. ein Ethernet ohne zusätzliches Routing. Auch Einrichtungen, bei denen eine jeweilige Kommunikation zwischen zwei Einrichtungen durch Punkt-zu-Punktverbindungen erfolgt, jedoch durch schalten der Switches unterschiedliche Einrichtungen miteinander kommunizieren können, werden in diesem Dokument als Netzwerk betrachtet. Somit kann es sich bei dem Netzwerk z.B. auch um ein Netzwerk aus mehreren über die Switches verbundenen PCI Express-Einrichtungen oder Ähnliches handeln.

Das Ansteuern des ersten und/oder oder zweiten Switches kann für wenigstens eine physikalische erste Schnittstelle vorgegeben, Datenframes und/oder Datenpakete mit welchen Parametern von wenigstens einer physikalischen zweiten Schnittstelle zu der ersten Schnittstelle übertragen werden und/oder umgekehrt. Hierbei kann die Ansteuerung insbesondere Regeln für Firewallfunktionen vorgeben, also vorgegeben, Datenframes bzw. Datenpakete mit welchen Parametern verworfen werden bzw. passieren dürfen. Ergänzend oder alternativ kann die Ansteuerung auch Regeln für ein Routing vorgeben.

Als Parameter können eine für ein Routing genutzte Zieladresse und/oder Herkunftsadresse und/oder eine Hardwareadresse einer Ziel- und/oder Herkunftseinrichtung und/oder ein verwendetes Protokoll und/oder eine Port-Nummer und/oder eine Kennung eines durch eine Einrichtung des Netzwerks implementierten Dienstes berücksichtigt werden. Die für das Routing genutzte Ziel- bzw. Herkunftsadresse kann insbesondere eine IP-Adresse, beispielsweise eine IPv4- bzw. IPv6-Adresse sein. Als Hardwareadresse kann eine MAC-Adresse verwendet werden. Bezüglich des verwendeten Protokolls kann beispielsweise zwischen der Verwendung eines TCP-Protokolls und eines UDP-Protokolls für das entsprechende Pakete unterschieden werden. Als Ports, die auch als Sockets bezeichnet werden, werden in den genannten Protokollen Adresszusätze bezeichnet, die als Teil der Netzadresse betrachtet werden können und beispielsweise unterschiedliche Dienste auf dem gleichen Endgerät kennzeichnen. Beispielsweise wird für http-Verbindungen bzw. Webdienste typischerweise der Port 80 verwendet. Kennungen für Dienste, auch Service-ID genannt, können beispielsweise bestimmte netzwerkaufrufbare Funktionen oder andere Dienste, die in höheren Schichten des OSI-Schichtenmodells angeordnet sind, betreffen.

In Abhängigkeit der genannten Parameter oder Teile dieser Parameter können insbesondere Whitelists definiert werden, also Listen von Einrichtungen bzw. Gruppen von Einrichtungen, für die eine Kommunikation zugelassen wird, oder Blacklists, also Listen von Geräten oder Gruppen von Geräten, für die eine entsprechende Kommunikation gesperrt wird. Whitelists können beispielsweise genutzt werden, um sicherzustellen, dass sicherheitsrelevante Endgeräte nur mit definierten anderen Endgeräten kommunizieren können. Blacklists können beispielsweise genutzt werden, um bekannte beschädigte oder kompromittierte Einrichtungen zu blockieren.

Das Ansteuern des ersten Switches gemäß der ersten Steuerinformation und/oder des zweiten Switches gemäß der zweiten Steuerinformation kann das unmittelbare Setzen von Registern des jeweiligen Switches, insbesondere über eine herstellerspezifische Schnittstelle, und/oder das Senden wenigstens eines Befehls an den jeweiligen Switch mittels einer Kommandozeilenschnittstelle und/oder eines Hypertext-Übertragungsprotokolls und/oder dem Simple Network Management Protocol und/oder dem Network Configuration Protocol (NETCONF) umfassen. Kommandozeilenschnittstellen können beispielsweise über eine serielle Schnittstelle des jeweiligen Switches oder auch über das Netzwerk, beispielsweise Telnet oder Secure Shell, implementiert sein. Die Steuerinformationen können hierbei Befehle zum Öffnen einer entsprechenden Verbindung und/oder eine Liste von Befehlen, die über eine entsprechende Kommandozeilenschnittstelle, beispielsweise mithilfe der Simulation von Eingaben, abgesendet wird, umfassen. Als Hypertext-Übertragungsprotokoll kann insbesondere das http- bzw. https-Protokoll verwendet werden. Dies kann beispielsweise vorteilhaft sein, wenn der entsprechende Switch ein Webinterface zur Konfiguration über einen Webbrowser bereitstellt. Die Steuerinformationen können in diesem Fall Benutzereingaben in einem solchen Webbrowser bzw. aus diesen resultierende Befehle, die über das Hypertext-Übertragungsprotokoll gesendet werden, simulieren, um auch in diesem Fall eine automatische Konfiguration zu ermöglichen.

In dem erfindungsgemäßen Verfahren können Verarbeitungsmodule verwendet werden, die als ein jeweiligen Softwaretreiber für den jeweiligen Switch implementierende Softwaremodule ausgebildet sind, die gemeinsam auf einer Verarbeitungseinrichtung ausgeführt werden. Hierdurch können die Verarbeitungsmodule mit geringem Hardwareaufwand implementiert werden. Alternativ wäre es beispielsweise möglich, jedes Verarbeitungsmodul durch eine separate Verarbeitungseinrichtung zu implementieren, die dem jeweiligen Switch zugeordnet ist und insbesondere im Bereich des jeweiligen Switches angeordnet ist. Dies kann beispielsweise vorteilhaft sein, wenn eine Ansteuerung über eine relativ aufwendige herstellerspezifische Schnittstelle erfolgen soll, die beispielsweise einen direkten Zugriff auf einzelne Register des Switches zur Konfiguration ermöglicht. Die jeweilige Konfigurationsinformation kann in diesem Fall beispielsweise über das Netzwerk oder eine andere relativ einfach aufgebaute Schnittstelle der entsprechenden Verarbeitungseinrichtung zugeführt werden und erst dort erfolgt die Umsetzung auf die potentiell komplex zu implementierende herstellerspezifische Schnittstelle.

Vorzugsweise sind die verwendeten Verarbeitungsmodule und/oder die verwendete Verarbeitungseinrichtung in das Kraftfahrzeug integriert. Hierbei kann, wie obig erläutert, eine gemeinsame Verarbeitungseinrichtung genutzt werden, die die Verarbeitungsmodule als Softwaretreiber implementiert. Alternativ kann zu jedem Switch eine zugeordnete Verarbeitungseinrichtung in das Kraftfahrzeug integriert werden, die die diesem Switch zugeordnete Konfigurationsinformation in Steuerinformationen für diesen Switch umsetzt.

In einer alternativen Ausgestaltung wäre es möglich, die Verarbeitungsmodule fahrzeugextern zu implementieren. Beispielsweise könnte bereits fahrzeugextern eine Umsetzung der Konfigurationsinformationen in Steuerinformationen für die einzelnen Switches erfolgen und diese könnten, beispielsweise drahtlos, zum Kraftfahrzeug übertragen werden. Ein entsprechendes Vorgehen kann vorteilhaft sein, wenn die Switches ausschließlich über eine fahrzeugexterne Ansteuerung, beispielsweise im Rahmen der Herstellung des Kraftfahrzeugs und/oder von Wartungsvorgängen, konfiguriert werden sollen. Die Integration der Verarbeitungsmodule bzw. der Verarbeitungseinrichtung in das Kraftfahrzeug ermöglicht hingegen auch fahrzeugintern Änderungen der Konfigurationen der Switches durch gemäß der gemeinsamen Syntax spezifizierte Konfigurationsinformationen, die dann fahrzeugintern in entsprechende Steuerinformationen umgesetzt werden.

Der erste und zweite Switch können sich bezüglich einer verwendeten Hardware und/oder Firmware des jeweiligen Switches unterscheiden. Beispielsweise können Switches unterschiedlicher Hersteller, unterschiedliche Modelle von Switches oder durch unterschiedliche Firmware programmierte Switches verwendet werden. Hierbei ist typischerweise im Rahmen der Konfiguration des Kraftfahrzeugs bereits bekannt, welche Switches verwendet werden sollen, so dass bekannt ist, welche Verarbeitungsmodule genutzt werden sollen, um Steuerinformation für die einzelnen Switches bereitzustellen. Anders ausgedrückt wird beispielsweise manuell oder automatisiert durch ein System, dass auch die in dem Netzwerk genutzten Switches vorgibt, ein passender Softwaretreiber bzw. ein passendes Verarbeitungsmodul für jeden der Switches gewählt, der jeweils dazu dient, die jeweiligen Konfigurationsinformationen in die jeweilige Steuerinformation umzusetzen.

Durch das erste und/oder zweite Verarbeitungsmodul wird jeweils geprüft, ob eine durch die erste und/oder zweite Konfigurationsinformation beschriebene jeweilige Sollfunktion jeweils durch den ersten und/oder zweiten Switch selbst implementierbar ist und anderenfalls wird zusätzlich wenigstens eine weitere Einrichtung des Netzwerks angesteuert, um die Sollfunktion gemeinsam mit dem ersten und/oder zweiten Switch zu implementieren. Die weitere Einrichtung kann beispielsweise auch die Verarbeitungseinrichtung oder eine der Verarbeitungseinrichtungen sein, die die Verarbeitungsmodule bzw. ein jeweiliges Verarbeitungsmodul ausführt. Es kann sich jedoch auch um eine beliebig andere Einrichtung handeln.

Beispielsweise kann die Sollfunktion ein Akzeptieren oder Verwerfen von Pakten oder Frames auf Basis eines genutzten Protokolls oder einer Port-Nummer fordern, was durch den Switch, für den die Konfiguration erfolgen soll, nicht unterstützt wird. Eine solche nicht unterstützte Funktion kann implementiert werden, indem der jeweilige Switch so konfiguriert wird, dass alle potentiell für diese Funktion relevanten Pakete oder Frames durch eine entsprechende Gatewayfunktion bzw. Routingfunktion an die weitere Einrichtung weitergeleitet werden, die anschließend insbesondere Parameter auswerten kann, die vom Switch nicht berücksichtigt werden, und Pakete bzw. Frames bedarfsgerecht verwerfen oder zur Weiterleitung an den Switch zurückübermitteln kann.

In vielen Anwendungsfällen wird ein Großteil der Entscheidungen bezüglich des Routings oder einer Firewallfunktion für Pakete bzw. Frames bereits durch den jeweiligen Switch selbst durchgeführt und eine Einbeziehung der weiteren Einrichtung ist nur für einen sehr kleinen Teil der Pakete bzw. Frames notwendig. Somit können auch Sollfunktionen, die nicht vollständig durch einen Switch selbst implementierbar sind, zumindest zum Teil durch den jeweiligen Switch verwirklicht werden, so dass für die weitere Einrichtung nur ein geringer Verarbeitungsaufwand verbleibt. Die weitere Einrichtung kann somit mit geringem Hardwareaufwand, beispielsweise als Teil einer Verarbeitungseinrichtung, die auch das Verarbeitungsmodul implementiert, implementiert werden.

Durch ein Überwachungsmodul des Kraftfahrzeugs kann der Betrieb wenigstens einer mit dem Netzwerk verbundenen Einrichtung und/oder eine Kommunikation innerhalb des Netzwerks überwacht werden und bei Erfüllung einer Auslösebedingung, die von dem überwachten Betrieb und/oder der überwachten Kommunikation abhängt, die erste und/oder zweite Konfigurationsinformation bereitgestellt werden, um die Konfiguration des ersten und/oder des zweiten Switches zu ändern. Das Überwachungsmodul kann durch eine Verarbeitungseinrichtung implementiert werden, die die Verarbeitungsmodule oder wenigstens eines der Verarbeitungsmodule implementiert. Alternativ können jedoch auch andere Einrichtungen des Netzes genutzt werden.

Bezüglich der Überwachung der Kommunikation können beispielsweise Zahlen oder Inhalte von Paketen oder Frames mit gewissen Herkunfts- oder Zieladressen oder Ähnliches ausgewertet werden. Bei der Überwachung einer Einrichtung kann beispielsweise überwacht werden, ob diese Einrichtung in regelmäßigen Abständen ein Signal schickt, das ihre korrekte Funktion indiziert. Es sind jedoch auch komplexere Überwachungen möglich, beispielsweise eine Abfrage von bestimmten Betriebsparametern, kryptografische Challenge-Response-Verfahren oder Ähnliches.

Durch die Überwachung des Betriebs der Einrichtung bzw. der Kommunikation im Netz kann insbesondere erkannt werden, wenn eine Einrichtung im Netz beschädigt oder kompromittiert ist. Beispielsweise können Hardwaremanipulationen, softwarebasierte Angriffe oder Ähnliches erkannt werden. Werden entsprechende Fehlfunktionen oder Angriffe erkannt, kann es beispielsweise gewünscht sein, eine Kommunikation einer kompromittierten Einrichtung mit anderen Einrichtungen im Netz vollständig zu blockieren, eine Kommunikation dieser Einrichtung mit bestimmten anderen Einrichtungen selektiv zu blockieren oder beispielsweise auch nur eine Kommunikation über bestimmte Protokolle oder Ports zu blockieren. Um dies zu erreichen, können die Switches durch Generieren einer entsprechenden Konfigurationsinformation umkonfiguriert werden.

Durch die erfindungsgemäß vorgesehene Umsetzung der jeweiligen Konfigurationsinformation in eine jeweilige Steuerinformation mithilfe eines jeweiligen Verarbeitungsmoduls bzw. Softwaretreibers wird hierbei der Vorteil erreicht, dass das Überwachungsmodul keine Kenntnisse über die Hardware oder Software der tatsächlich genutzten Switches bzw. die Syntax ihrer Steuerinformation haben muss, da durch das Überwachungsmodul nur eine Konfigurationsinformation in der gemeinsamen Syntax bereitgestellt werden muss. Dies erleichtert die Implementierung eines solchen Überwachungsmoduls und die Nutzung in verschiedenen Kraftfahrzeugnetzwerken deutlich.

Neben dem erfindungsgemäßen Verfahren betrifft die Erfindung ein Kraftfahrzeug mit einem Netzwerk, das wenigstens einen ersten und einen zweiten Switch umfasst, wobei es zur Durchführung des erfindungsgemäßen Verfahrens eingerichtet ist. Insbesondere implementiert das Kraftfahrzeug bzw. eine Verarbeitungseinrichtung des Kraftfahrzeugs die jeweiligen Verarbeitungsmodule, die die jeweilige Konfigurationsinformation in die jeweilige Steuerinformation umsetzen, wie bereits obig erläutert wurde. Die Verarbeitungsmodule bzw. die Verarbeitungseinrichtung, die die Verarbeitungsmodule implementiert bzw. eine jeweilige Verarbeitungseinrichtung, die das jeweilige Verarbeitungsmodul implementiert, ist zudem vorzugsweise dazu eingerichtet, den jeweiligen Switch gemäß der jeweiligen Steuerinformation anzusteuern. Die zum erfindungsgemäßen Verfahren diskutierten Merkmale können mit den dort genannten Vorteilen auf das erfindungsgemäße Kraftfahrzeug übertragen werden und umgekehrt.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel eines erfindungsgemäßen Kraftfahrzeugs, das zur Durchführung eines Ausführungsbeispiels des erfindungsgemäßen Verfahrens eingerichtet ist, und
- Fig. 2: ein Ablaufdiagramm eines Ausführungsbeispiels des erfindungsgemäßen Verfahrens.

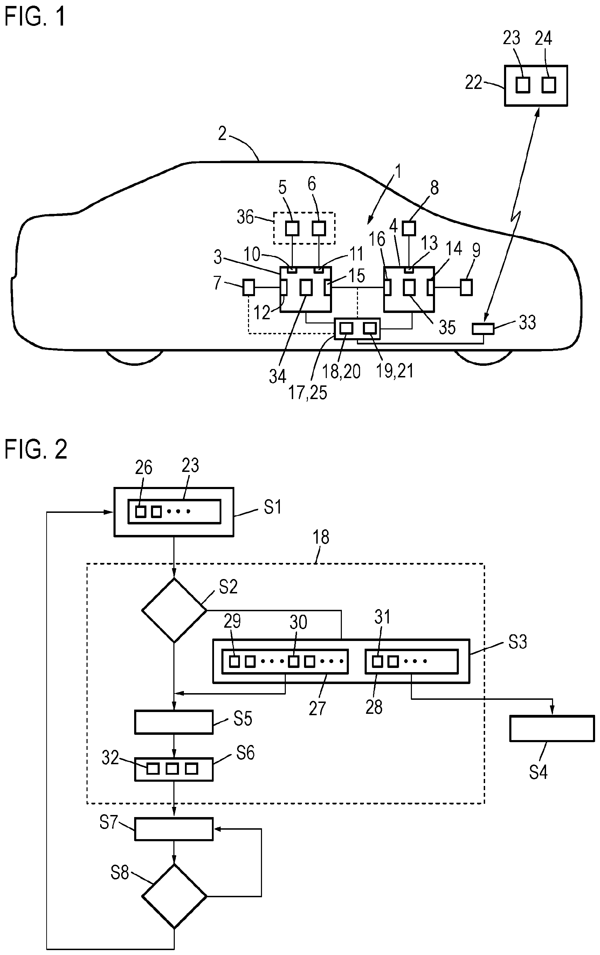

Fig. 1 zeigt ein Kraftfahrzeug 2 mit einem fahrzeuginternen Netzwerk 1. Das Netzwerk 1 kann eine Kommunikation zwischen einer Vielzahl von Einrichtungen 5 bis 9 des Netzwerks 1 ermöglichen. Um einerseits eine Anzahl von Kollisionen im Netzwerk 1 zu reduzieren und andererseits durch ein selektives Routing bzw. selektive Verbindungen über Gateway zwischen den Einrichtungen 5 bis 9 eine Zugriffssteuerung zu realisieren, sind die Einrichtungen 5 bis 9 nicht unmittelbar miteinander gekoppelt, sondern mit einer jeweiligen physikalischen Schnittstelle 10 bis 14 der Switches 3, 4 verbunden. Über weitere physikalische Schnittstellen 15, 16 der Switches 3, 4 sind diese miteinander verbunden. Durch die Verwendung mehrerer Switchers kann beispielsweise eine verbesserte Trennung zwischen fahrrelevanten Einrichtungen 8, 9 und eher komfortrelevanten Einrichtungen 5 bis 7 verbessert werden, wobei dennoch ein Informationsaustausch zwischen diesen Einrichtungen 5 bis 9 ermöglicht wird.

Wie für die Einrichtungen 5, 6 dargestellt ist, können mehrere Einrichtungen innerhalb eines durch den jeweiligen Switch 3, 4 implementierten VLAN 36 (Virtual Local Area Network) liegen, innerhalb dem eine Kommunikation ohne ein explizites Routing von Paketen möglich ist. Bei den Switches 3, 4 handelt es sich vorzugsweise um sogenannte Layer-3-Switches, die auch ein Routing von Paketen zwischen verschiedenen VLANs 36 bzw. zwischen verschiedenen Einrichtungen 5 bis 9 ermöglichen.

Aus Übersichtlichkeitsgründen sind in Fig. 1 eine relativ geringe Zahl von Einrichtungen 5 bis 9 und nur zwei Switches 3, 4 dargestellt. Die im Folgenden erläuterte Lehre bezüglich der Nutzung und Konfiguration der Switches 3, 4 lässt sich selbstverständlich auch auf Netzwerke 1 mit einer größeren Zahl von Switches 3, 4 bzw. einer größeren Zahl von Einrichtungen 5 bis 9 übertragen.

Die Switches 3, 4 sind im Kraftfahrzeug 2 jeweils derart konfiguriert, dass sie neben einem Routing von Paketen zwischen den Einrichtungen 5 bis 9 auch Firewallfunktionen implementieren. Hierbei werden im Rahmen der Konfiguration des jeweiligen Switches 3, 4 für einzelne der Schnittstellen 10 bis 16 oder auch für Gruppen der Schnittstellen 10 bis 16 oder alle Schnittstellen 10 bis 16 Regeln vorgegeben, welche Datenframes bzw. Datenpakete über die jeweilige Schnittstelle empfangen, ausgesendet bzw. weitergeleitet werden sollen. Hierbei werden jeweils Parameter des jeweiligen Datenframes bzw. Datenpakets ausgewertet, wobei beispielsweise eine für das Routing genutzte Zieladresse und/oder Herkunftsadresse und/oder eine Hardwareadresse einer Ziel- und/oder Herkunftseinrichtung und/oder ein verwendetes Protokoll und/oder eine Port-Nummer berücksichtigt werden. Hierbei ist es möglich, Pakete, für die die genannten Parameter oder Teile dieser Parameter bestimmte Werte aufweisen bzw. in bestimmten Wertebereichen liegen, grundsätzlich zu verwerfen. Dies wird auch als Blacklisting bezeichnet und ermöglicht es, beispielsweise, eine Kommunikation zu einem bestimmten Port einer bestimmten der Einrichtung 5 bis 9 von einer bestimmten anderen der Einrichtungen 5 bis 9 zu verbieten. Andererseits kann ein Whitelisting erfolgen, bei dem alle Pakete, die eine bestimmte Bedingungen nicht erfüllen, verworfen werden. Dies kann beispielsweise dazu dienen, einen Zugriff auf einen bestimmten Port einer bestimmten Einrichtung 5 bis 9 nur von einer bestimmten anderen Einrichtung 5 bis 9 zuzulassen oder Ähnliches.

Die erläuterte Konfiguration der Switches 3, 4 kann in üblichen Kraftfahrzeugen 2 bzw. allgemein in Netzwerken 1 relativ aufwendig sein, wenn sich die Hardware der Switches 3, 4 oder eine jeweilige installierte Firmware 34, 35 voneinander unterscheiden. In diesem Fall ist es möglich, dass zur Konfiguration des ersten Switches 3 eine erste Syntax und zur Konfiguration des zweiten Switches 4 eine hiervon unterschiedliche zweite Syntax erforderlich ist. Hierbei ist es sogar möglich, dass sich bereits die Art der zur Konfiguration genutzten Schnittstelle unterscheidet. So wäre es beispielsweise möglich, dass der erste Switch über einen Secure Shell Zugriff konfiguriert wird, während der zweite Switch 4 über einen Webbrowser konfiguriert wird. Selbst in Fällen, in denen beide Switches 3, 4 das gleiche Interface aufweisen, kann die gleiche Konfigurationsaufgabe jedoch unterschiedliche Befehle, unterschiedliche Parameterreihenfolge oder Ähnliches erfordern. Eine Konfiguration der Switches 3, 4 ist somit sehr aufwendig und Konfigurationen können beispielsweise nicht auf Kraftfahrzeuge 2 übertragen werden, in denen andere Switchtypen genutzt werden.

Daher wird im Kraftfahrzeug 2 ein Verfahren zur Konfiguration des Netzwerkes 1 genutzt, bei dem eine ersten Konfigurationsinformation 23 für den ersten Switch 3 und eine zweite Konfigurationsinformation 24 für den zweiten Switch 4 gemäß einer gemeinsamen Syntax bereitgestellt werden und diese Konfigurationsinformationen 23, 24 in die jeweilige Steuerinformationen zur Steuerung des jeweiligen Switches 3, 4 umgesetzt werden. Eine mögliche Implementation eines solchen Verfahrens wird im Folgenden mit zusätzlichem Bezug auf Fig. 2 näher erläutert. Hierbei ist in Fig. 2 aus Übersichtlichkeitsgründen ausschließlich die Verarbeitung bzw. Anpassung der ersten Konfigurationsinformation 23 dargestellt. Die Verarbeitung der zweiten Konfigurationsinformation 24 verläuft entsprechend.

In Schritt S1 werden die ersten Konfigurationsinformation 23 und die zweite Konfigurationsinformation 24 bereitgestellt. Die Konfigurationsinformationen 23, 24 können zunächst eine Ausgangskonfiguration des Netzwerkes 1 bzw. der Switches 3, 4 beschreiben, die beispielsweise bei Auslieferung bzw. nach einer Wartung des Kraftfahrzeugs 2 vorliegen soll. Sie können von einer fahrzeugexternen Einrichtung 22 beispielsweise über eine Kommunikationseinrichtung 33 des Kraftfahrzeugs 2 an eine Verarbeitungseinrichtung 17 bereitgestellt werden. Die Verarbeitungseinrichtung 17 implementiert Verarbeitungsmodule 18, 19, die dazu dienen, die jeweilige Konfigurationsinformation 23, 24 in eine jeweilige Steuerinformation 32 umzusetzen, die zur Ansteuerung des jeweiligen Switches 3, 4 dient. Hierbei weist die in Fig. 2 dargestellten Steuerinformation 32 für den ersten Switch 3 eine andere Syntax auf als die nicht dargestellte Steuerinformation für den Switch 4.

Wie in Fig. 2 dargestellt ist, kann die jeweilige Konfigurationsinformation 23 mehrere Sollfunktionen 26 beschreiben, die der jeweilige Switch 3, 4 nach der Konfiguration durchführen soll. So kann beispielsweise gewünscht sein, dass Pakete mit einer bestimmten Ziel- und/oder Herkunftsadresse grundsätzlich verworfen werden, Pakete mit einer anderen Ziel- und/oder Herkunftsadresse grundsätzlich weitergeleitet werden und für wenigstens eine Ziel- und/oder Herkunftsadresse eine Zusatzbedingung gilt, beispielsweise dass nur Pakete mit einer bestimmten Port-Nummer oder einem bestimmten verwendeten Protokoll weitergeleitet werden. Hierbei ist es möglich, dass einige dieser Sollfunktionen durch den jeweiligen Switch 3, 4 für sich genommen nicht implementiert werden können.

Da die Eigenschaften des jeweiligen Switches 3, 4 bzw. der jeweiligen Firmware 34, 35 im jeweiligen Verarbeitungsmodul 18, 19 bzw. in den implementierten Softwaretreibern 20, 21 bekannt sind, kann im Schritt S2 zunächst geprüft werden, ob die Sollfunktionen 26 durch den Switch 3, 4 selbst implementiert werden können oder ob dies nur mithilfe einer weiteren Einrichtung des Netzwerks möglich ist. Im gezeigten Beispiel wird die Verarbeitungseinrichtung 17 als weitere Einrichtung verwendet, prinzipiell wäre es jedoch auch möglich, eine der Einrichtungen 5 bis 9 als weitere Einrichtung zu verwenden.

Im beschriebenen Beispiel ist es beispielsweise möglich, dass jene Sollfunktion, die ein verwendetes Protokoll bzw. eine Port-Nummer auswertet, nicht durch den Switch 3 selbst umgesetzt werden kann, da dieser entsprechende Informationen nicht auswertet. Ist dies der Fall, so wird in Schritt S3 eine abgewandelte Konfigurationsinformation 27 für den Switch 3 generiert, die einerseits jene Sollfunktionen 29 umfasst, die durch den Switch 3 selbst implementiert werden können, und andererseits Sollfunktionen 30 umfasst, die gemeinsam mit Sollfunktionen 31 der weiteren Einrichtung jene ursprünglichen Sollfunktionen 26 umsetzen, die nicht durch den Switch 3 selbst umgesetzt werden können. Beispielsweise kann eine Sollfunktion 30 für den Switch 3 beschreiben, dass Pakete mit einer Ziel- bzw. Herkunftsadresse, für die das verwendete Protokoll bzw. die Port-Nummer ausgewertet werden soll, zu der weiteren Einrichtung geroutet werden sollen und die Sollfunktion 31 kann eine entsprechende Selektion auf Basis des verwendete Protokolls bzw. der Port-Nummer spezifizieren.

Hierbei ist es möglich, dass die weitere Einrichtung unmittelbar Konfigurationsinformationen 28 gemäß der gemeinsamen Syntax verarbeiten kann. Beispielsweise kann die gemeinsame Syntax der Syntax des iptables- bzw. nftables-Framework entsprechen und ein entsprechendes Framework kann auf der weiteren Einrichtung implementiert sein. Alternativ wäre es auch möglich, die Konfigurationsinformationen 28 in Steuerinformationen umzusetzen, wie im Folgenden für die Konfigurationsinformation 23, 27 erläutert werden wird. Die Konfigurationsinformation 28 wird in Schritt S4 zur weiteren Einrichtung übermittelt, um diese zu konfigurieren.

Die Konfigurationsinformation 27 für den ersten Switch 3 bzw., in dem Fall, dass der Switch 3 selbst alle Sollfunktionen 26 ausführen kann, die Konfigurationsinformation 23 wird in Schritt S5 durch das erste Verarbeitungsmodul 18 in die Steuerinformation 32 für den ersten Switch 3 umgesetzt, die in Schritt S6 an den ersten Switch 3 gesendet wird.

Das mit Bezug auf die Schritte S2 bis S6 beschriebene Vorgehen für die erste Konfigurationsinformation 23, den ersten Switch 3 und die erste Steuerinformation 32 wird entsprechend durch das zweite Verarbeitungsmodul 19 für die zweiten Kommunikationsinformation 24, den zweiten Switch 4 und die nicht gezeigte zweite Steuerinformation wiederholt bzw. parallel ausgeführt.

Im laufenden Betrieb des Kraftfahrzeugs soll es möglich sein, die Konfiguration der Switches 3, 4 bedarfsgerecht zu ändern, beispielsweise wenn erkannt wird, dass eine der Einrichtungen 5 bis 9 beschädigt ist bzw. durch eine mechanische Manipulation, Schadsoftware oder Ähnliches kompromittiert ist. Hierzu kann durch ein Überwachungsmodul 25, das im gezeigten Beispiel ebenfalls durch die Verarbeitungseinrichtung 17 implementiert wird, wie durch die gestrichelten Linien in Fig. 1 angedeutet ist, die Kommunikation im Netzwerk 1 sowie der Betrieb wenigstens einer der Einrichtungen 5 bis 9 in Schritt S7 überwacht werden. Bezüglich der Kommunikation im Netzwerk 1 kann beispielsweise die Häufigkeit bzw. der Inhalt bestimmter Pakete überwacht werden. Zur Überwachung einzelner Einrichtungen 5 bis 9 kann beispielsweise gefordert werden, dass diese innerhalb regelmäßiger Abstände mit dem Überwachungsmodul 25 kommunizieren. Eine Kompromittierung einzelner Einrichtungen 5 bis 9 kann beispielsweise auch durch kryptografische Challenge-Response-Verfahren oder Ähnliches erkannt werden.

In Schritt S8 wird überprüft, ob eine Auslösebedingung, deren Erfüllung von den in Schritt S7 erfassten Informationen abhängt, erfüllt ist. Ist dies nicht der Fall, so wird die Überwachung in Schritt S7 fortgesetzt. Ist die Auslösebedingung hingegen erfüllt, wird durch das Überwachungsmodul 25 für wenigstens einen der Switches 3, 4 eine geänderte Konfigurationsinformation 23, 24 vorgeben, die beispielsweise ein Blacklisting einer beschädigten oder kompromittierten Einrichtung 5 bis 9 betrifft. Hierbei wird für die jeweilige Konfigurationsinformation 23, 24 wie vorangehend bezüglich der fahrzeugexternen Bereitstellung dieser Konfigurationsinformation 23, 24 erläutert, die gemeinsame Syntax benutzt, die von der konkreten Implementierung der Switches 3, 4 unabhängig ist. Hierdurch müssen Besonderheiten der Switches 3, 4 bzw. ihrer Firmware 34, 35 bei der Implementierung des Überwachungsmoduls 25 nicht bekannt sein. Entsprechende Besonderheiten werden stattdessen, wie bereits erläutert, durch die Verarbeitungsmodule 18, 19 bzw. die diese implementierenden Softwaretreiber 20, 21 berücksichtigt.

## Patentansprüche

1. Verfahren zur Konfiguration eines Netzwerks (1) das wenigstens einen ersten und einen zweiten Switch (3, 4) umfasst, umfassend die Schritte:
- Bereitstellen einer ersten Konfigurationsinformation (23) für den ersten Switch (3) und einer zweiten Konfigurationsinformation (24) für den zweiten Switch (4) gemäß einer gemeinsamen Syntax,
- Umsetzen der ersten Konfigurationsinformation (23) in eine erste Steuerinformation (32) und der zweiten Konfigurationsinformation (24) in eine zweite Steuerinformation durch ein jeweiliges Verarbeitungsmodul (18, 19), wobei sich eine Syntax der ersten Steuerinformation (32) von einer Syntax der zweiten Steuerinformation unterscheidet,
- Ansteuern des ersten Switches (3) gemäß der ersten Steuerinformation (32) und des zweiten Switches (4) gemäß der zweiten Steuerinformation,
**dadurch gekennzeichnet,**
**dass** durch das erste und/oder zweite Verarbeitungsmodul (18, 19) jeweils geprüft wird, ob eine durch die erste und/oder zweite Konfigurationsinformation (23, 24) beschriebene jeweilige Sollfunktion (26) jeweils durch den ersten und/oder zweiten Switch (3, 4) selbst implementierbar ist und anderenfalls zusätzlich wenigstens eine weitere Einrichtung (5 - 9, 17) des Netzwerkes (1) angesteuert wird, um die Sollfunktion (26) gemeinsam mit dem ersten und/oder zweiten Switch (3, 4) zu implementieren.

2. Verfahren nach Anspruch 1,
**dadurch gekennzeichnet,**
**dass** das Ansteuern des ersten und/oder zweiten Switches (3, 4) für wenigstens eine physikalische erste Schnittstelle (10 - 16) vorgibt, Datenframes und/oder Datenpakete mit welchen Parametern von wenigstens einer physikalischen zweiten Schnittstelle (10 -16) zu der ersten Schnittstelle (10 - 16) übertragen werden und/oder umgekehrt.

3. Verfahren nach Anspruch 2,
**dadurch gekennzeichnet,**
**dass** als Parameter eine für ein Routing genutzte Zieladresse und/oder Herkunftsadresse und/oder eine Hardwareadresse einer Ziel- und/oder einer Herkunftseinrichtung und/oder ein verwendetes Protokoll und/oder eine Port-Nummer und/oder eine Kennung eines durch eine Einrichtung des Netzwerks implementierten Dienstes berücksichtigt werden.

4. Verfahren nach einem der vorangehenden Ansprüche,
**dadurch gekennzeichnet,**
**dass** das Ansteuern des ersten Switches (3) gemäß der ersten Steuerinformation (32) und/oder des zweiten Switches (4) gemäß der zweiten Steuerinformation das unmittelbare Setzen von Registern des jeweiligen Switches (3, 4) und/oder das Senden wenigstens eines Befehls an den jeweiligen Switch (3, 4) mittels einer Kommandozeilenschnittstelle und/oder eines Hypertext-Übertragungsprotokolls und/oder dem Simple Network Management Protocol und/oder dem Network Configuration Protocol umfasst.

5. Verfahren nach einem der vorangehenden Ansprüche,
**dadurch gekennzeichnet,**
**dass** Verarbeitungsmodule (18, 19) verwendet werden, die als einen jeweiligen Softwaretreiber (20, 21) für den jeweiligen Switch (3, 4) implementierende Softwaremodule ausgebildet sind, die gemeinsam auf einer Verarbeitungseinrichtung (17) ausgeführt werden.

6. Verfahren nach Anspruch 5,
**dadurch gekennzeichnet,**
**dass** die verwendete Verarbeitungseinrichtung (17) in einem Kraftfahrzeug (2) integriert ist.

7. Verfahren nach einem der vorangehenden Ansprüche,
**dadurch gekennzeichnet,**
**dass** die verwendeten Verarbeitungsmodule (18, 19) in einem Kraftfahrzeug (2) integriert sind.

8. Verfahren nach einem der vorangehenden Ansprüche,
**dadurch gekennzeichnet,**
**dass** sich der erste und zweite Switch (3, 4) bezüglich einer verwendeten Hardware und/oder Firmware (34, 35) des jeweiligen Switches (3, 4) unterscheiden.

9. Verfahren nach einem der vorangehenden Ansprüche,
**dadurch gekennzeichnet,**
**dass** durch ein Überwachungsmodul (25) eines Kraftfahrzeugs (2) der Betrieb wenigstens einer mit dem Netzwerk (1) verbundenen Einrichtung (5 - 9) und/oder eine Kommunikation innerhalb des Netzwerkes (1) überwacht wird und bei Erfüllung einer Auslösebedingung die von dem überwachten Betrieb und/oder der überwachten Kommunikation abhängt, die erste und/oder zweite Konfigurationsinformation (23, 24) bereitgestellt wird, um die Konfiguration des ersten und/oder des zweiten Switches (3, 4) zu ändern.

10. Verfahren nach einem der vorangehenden Ansprüche,
**dadurch gekennzeichnet,**
**dass** als das Netzwerk (1) ein Netzwerk (1) in einem Kraftfahrzeug konfiguriert wird.

11. Kraftfahrzeug mit einem Netzwerk (1), das wenigstens einen ersten und einen zweiten Switch (3, 4) umfasst,
**dadurch gekennzeichnet,**
**dass** es zur Durchführung des Verfahrens nach einem der vorangehenden Ansprüche eingerichtet ist.

## Claims

1. Method for configuring a network (1) that comprises at least a first and a second switch (3, 4), comprising the following steps:
- providing first configuration information (23) for the first switch (3) and second configuration information (24) for the second switch (4) in a common syntax,
- converting the first configuration information (23) into first control information (32) and the second configuration information (24) into second control information by way of a respective processing module (18, 19), wherein a syntax of the first control information (32) differs from a syntax of the second control information,
- actuating the first switch (3) in accordance with the first control information (32) and the second switch (4) in accordance with the second control information,
**characterized in that**
the first and/or second processing module (18, 19) is used respectively to check whether a respective target function (26) described by the first and/or second configuration information (23, 24) is respectively able to be implemented by the first and/or second switch (3, 4) on its own and, otherwise, at least one further device (5-9, 17) of the network (1) is additionally actuated in order to implement the target function (26) together with the first and/or second switch (3, 4).

2. Method according to Claim 1,
**characterized in that**
the actuation of the first and/or second switch (3, 4) specifies, for at least one physical first interface (10-16), data frames and/or data packets by way of which parameters are transmitted from at least one physical second interface (10-16) to the first interface (10-16) and/or vice versa.

3. Method according to Claim 2,
**characterized in that**
a destination address and/or originating address used for routing and/or a hardware address of a destination device and/or an originating device and/or a used protocol and/or a port number and/or an identifier of a service implemented by a device of the network are taken into consideration as parameters.

4. Method according to one of the preceding claims,
**characterized in that**
actuating the first switch (3) in accordance with the first control information (32) and/or the second switch (4) in accordance with the second control information comprises directly setting registers of the respective switch (3, 4) and/or transmitting at least one command to the respective switch (3, 4) by way of a command line interface and/or a Hypertext Transfer Protocol and/or the Simple Network Management Protocol and/or the Network Configuration Protocol.

5. Method according to one of the preceding claims,
**characterized in that**
use is made of processing modules (18, 19) that are designed as software modules that implement a respective software driver (20, 21) for the respective switch (3, 4) and that are executed jointly on a processing device (17) .

6. Method according to Claim 5,
**characterized in that**
the processing device (17) that is used is integrated in a motor vehicle (2).

7. Method according to one of the preceding claims,
**characterized in that**
the processing modules (18, 19) that are used are integrated in a motor vehicle (2).

8. Method according to one of the preceding claims,
**characterized in that**
the first and second switch (3, 4) differ from one another in terms of used hardware and/or firmware (34, 35) of the respective switch (3, 4).

9. Method according to one of the preceding claims,
**characterized in that**
the operation of at least one device (5-9) connected to the network (1) and/or communication within the network (1) is monitored by a monitoring module (25) of a motor vehicle (2) and, when a trigger condition that depends on the monitored operation and/or the monitored communication is met, the first and/or second configuration information (23, 24) is provided in order to change the configuration of the first and/or the second switch (3, 4).

10. Method according to one of the preceding claims,
**characterized in that**
a network (1) in a motor vehicle is configured as the network (1).

11. Motor vehicle having a network (1) that comprises at least a first and a second switch (3, 4),
**characterized in that**
it is configured to perform the method according to one of the preceding claims.

## Revendications

1. Procédé permettant de configurer un réseau (1) comprenant au moins un premier et un deuxième commutateur de réseau (3, 4), comprenant les étapes consistant à :
- fournir une première information de configuration (23) pour le premier commutateur de réseau (3) et une deuxième information de configuration (24) pour le deuxième commutateur de réseau (4) selon une syntaxe commune,
- convertir la première information de configuration (23) en une première information de commande (32) et la deuxième information de configuration (24) en une deuxième information de commande par un module de traitement (18, 19) respectif, dans lequel une syntaxe de la première information de commande (32) est différente d'une syntaxe de la deuxième information de commande,
- piloter le premier commutateur de réseau (3) selon la première information de commande (32) et le deuxième commutateur de réseau (4) selon la deuxième information de commande,
**caractérisé en ce que** le premier et/ou le deuxième module de traitement (18, 19) vérifie(nt) respectivement si une fonction de consigne (26) respective, décrite par la première et/ou la deuxième information de configuration (23, 24), peut être mise en œuvre respectivement par le premier et/ou le deuxième commutateur de réseau (3, 4) lui-même/euxmêmes, et sinon en plus au moins un autre équipement (5 à 9, 17) du réseau (1) est piloté pour mettre en œuvre la fonction de consigne (26) conjointement avec le premier et/ou le deuxième commutateur de réseau (3, 4).

2. Procédé selon la revendication 1, **caractérisé en ce que** le pilotage du premier et/ou du deuxième commutateur(s) de réseau (3, 4) pour au moins une première interface physique (10 à 16) spécifie des trames de données et/ou des paquets de données qui transmettent des paramètres d'au moins une deuxième interface physique (10 à 16) à la première interface physique (10 à 16) et/ou vice versa.

3. Procédé selon la revendication 2, **caractérisé en ce qu'**une adresse de destination et/ou une adresse d'origine utilisée(s) pour un acheminement et/ou une adresse matérielle d'un équipement de destination et/ou d'origine et/ou un protocole utilisé et/ou un numéro de port et/ou un identifiant d'un service mis en œuvre par un équipement du réseau sont pris en compte en tant que paramètres.

4. Procédé selon l'une quelconque des revendications précédentes, **caractérisé en ce que** le pilotage du premier commutateur de réseau (3) selon la première information de commande (32) et/ou du deuxième commutateur de réseau (4) selon la deuxième information de commande comprend l'activation directe de registres du commutateur de réseau respectif (3, 4) et/ou la transmission d'au moins un ordre au commutateur de réseau respectif (3, 4) au moyen d'une interface de ligne de commande et/ou d'un protocole de transmission hypertexte et/ou du protocole simple de gestion de réseau (SNMP) et/ou du protocole de configuration de réseau.

5. Procédé selon l'une quelconque des revendications précédentes, **caractérisé en ce que** des modules de traitement (18, 19) sont utilisés qui sont réalisés comme mettant en œuvre un pilote logiciel respectif (20, 21) pour le commutateur de réseau respectif (3, 4) et qui sont exécutés conjointement sur un équipement de traitement (17).

6. Procédé selon la revendication 5, **caractérisé en ce que** l'équipement de traitement utilisé (17) est intégré dans un véhicule automobile (2).

7. Procédé selon l'une quelconque des revendications précédentes, **caractérisé en ce que** les modules de traitement (18, 19) utilisés sont intégrés dans un véhicule automobile (2).

8. Procédé selon l'une quelconque des revendications précédentes, **caractérisé en ce que** le premier et le deuxième commutateur de réseau (3, 4) se distinguent en termes de matériel et/ou de microprogramme (34, 35) utilisé(s) du commutateur de réseau respectif (3, 4).

9. Procédé selon l'une quelconque des revendications précédentes, **caractérisé en ce qu'**un module de surveillance (25) d'un véhicule automobile (2) surveille le fonctionnement d'au moins un équipement (5 à 9) relié au réseau (1) et/ou une communication à l'intérieur du réseau (1), et si une condition de déclenchement qui dépend du fonctionnement surveillé et/ou de la communication surveillée est satisfaite, la première et/ou la deuxième information de configuration (23, 24) sont fournies pour modifier la configuration du premier et/ou du deuxième commutateur de réseau (3, 4) .

10. Procédé selon l'une quelconque des revendications précédentes, **caractérisé en ce qu'**un réseau (1) dans un véhicule automobile est configuré en tant que réseau (1) .

11. Véhicule automobile pourvu d'un réseau (1) qui comprend au moins un premier et un deuxième commutateur de réseau (3, 4), **caractérisé en ce qu'**il est conçu pour exécuter le procédé selon l'une quelconque des revendications précédentes.
